# EUROPÄISCHE PATENTANMELDUNG

(11) **EP 2 175 551 A2**
(43) Veröffentlichungstag der Anmeldung: **14.04.2010**
(21) Anmeldenummer: 09010144.5
(22) Anmeldetag: 06.08.2009
(51) Int. Cl.: H02M 7/219

(54) **Verfahren zum Betreiben einer Stromrichter-Schaltung mit Spannungserhöhung**

(30) Priorität: 08.10.2008 DE 102008042693
(71) Anmelder: SEMIKRON Elektronik GmbH & Co. KG, 90431 Nürnberg (DE)
(72) Erfinder: Schreiber, Dejan, 90408 Nürnberg (DE)

(57) **Zusammenfassung**

Verfahren zum Betreiben einer Stromrichter-Schaltung mit Spannungserhöhung (2,500) mit N, jeweils mit ihrem Mittenanschluss (9,512a-c) an eine Phase (P1-5) eines N-phasigen Generators (4,502) anschließbaren, endseitig parallel auf eine Reihenschaltung von zwei Kapazitäten (19,524a,b) geschalteten Halbbrücken (8,510a-c), wobei jede Halbbrücke (8,510a-c)einen Top-Schalter (12a,516a-c) und einen Bot-Schalter (12b,518a-c) enthält, bei dem in einem PWM-Verfahren mit fester Periodendauer (T):
- bei Beginn der Periodendauer (T) alle TOP-Schalter (12a,516a-c) gleichzeitig für die Dauer eines TOP-Einschaltintervalls (Tein,a) eingeschaltet werden,
- nach der halben Periodendauer (T/2) alle BOT-Schalter (12b,518a-c) gleichzeitig für die Dauer eines BOT-Einschaltintervalls (Tein,b) eingeschaltet werden,
- wobei TOP- (Tein,a) und BOT-Einschaltintervall (Tein,b) maximal die halbe Periodendauer (T/2) betragen.

## Beschreibung

Die Erfindung betrifft ein Verfahren zum Betreiben einer Stromrichter-Schaltung mit Spannungserhöhung.

Elektrische Drehstromgeneratoren dienen der Erzeugung elektrischer Energie, welche in der Regel in ein Versorgungsspannungsnetz gespeist wird. Bei bestimmten Generatoren, z.B. in von den augenblicklichen Windverhältnissen abhängigen windkraftanlagen können deren Ausgangdrehzahl, -leistung oder - spannung schwanken bzw. weder vorhersagbar noch steuerbar sein. Da die vom Generator gelieferte Spannung damit unterhalb der Spannung des zu speisenden Netzes liegen kann, ist zwischen Generator und Netz eine Hochsetzsteller-(Boost-)Schaltung geschaltet. Insbesondere für Generatoren mit Mittenanschluss werden sogenannte Stromrichter-Schaltungen eingesetzt, welche, bezogen auf ein Mittenpotential, eine positive und negative Spannung in einem Gleichspannungszwischenkreis mit zwei seriell geschalteten Kondensatoren bzw. Kapazitäten erzeugen, wobei die Spannungen der jeweiligen Kondensatoren unabhängig voneinander einstell- bzw. regelbar sind. Asymmetrien im Versorgungsspannungsnetz oder Generator können so ausgeglichen werden. Hierzu weist jeder Kondensator eine zugeordnete Hochsetzstellerschaltung auf.

Eine der Erfindung zu Grunde liegende Schaltungsanordnung 500 ist z.B. aus der EP 1 313 206 B1 bekannt und in Fig. 4 (ohne gestrichelte Verbindungsleitungen 11a,b) gezeigt. Die drei Phasen P1 bis P3 eines Generators 502 sind über einen Drosselblock 504 bzw. jeweils über eine Drossel L1 bis L3 an einen Wechselrichter 506 angeschlossen. Die drei Phasen P1 bis P3 mit einer Scheitelspannung Uₛ sind hierbei auf je einen Mittenanschluss 512a-c dreier Halbbrücken 510a-c des Wechselrichters 506 geführt. Von jedem Mittenanschluss führt ein Topschalter 516a-c zu einem gemeinsamen Top-Anschluss 514 und Botschalter 516a-c zu einem gemeinsamen Bot-Anschluss 515. Jeder Schalter besteht hierbei aus einem IGBT 520 mit antiparallel geschalteter Diode 522.

Zwischen Top-Anschluss 514 und Bot-Anschluss 515 ist ein Zwischenkreis 508 angeschlossen, der zwei in Reihe geschaltete Kondensatoren 524a,b enthält, deren Mittenanschluss 526 mit dem Mittenanschluss M des Generators 502 verbunden ist.

Beispielhaft ist aus der US 6,567,283 B2 bekannt zwischen einem Diodengleichrichter und dem Zwischenkreis 508 zwei in Reihe geschaltete Top- und Bot-IGBTS mit Freilaufdioden einzufügen, welche über in den Top- und Bot-Anschlüssen 514,515 liegende Stromrichterdioden den Kondensatoren 524a,b parallel geschaltet sind. So wird das Kurzschließen des Generators zu Boost-Zwecken vom Wechselrichter in einen separaten Boost-Zweig verlegt.

Gemäß Fig. 5 ist aus der US 6,879,053 eine weitere Schaltungsanordnung bekannt. Die Phasen P₁ bis P₃ werden hier über den Drosselblock 504 auf einen Diodengleichrichter 550 geleitet. Die gleichgerichtete Spannung wird dann auf einen DC-DC-Konverter 552 geführt, der die Kapazitäten 524a,b lädt. Der DC-DC-Konverter 552 enthält zwei Aufwärtswandler 554a,b, je einen pro seriell geschaltetem Kondensator 524a,b.

Die Ansteuerung der bekannten Hochsetzsteller ist relativ einfach auszuführen, da diese auf die bereits gleichgerichtete Spannung wirken und nicht mehr mit den Generatorphasen synchronisiert werden müssen. Die Anzahl der benötigten Halbleitermodule ist allerdings mit drei Schalter-Halbbrücken auf drei Diodenhalbbrücken und vier Schalterhalbbrücken erheblich.

In der Praxis werden nämlich für die Reihenschaltung eines Schalters und der zugehörigen Stromrichterdiode jeweils vollbestückte IGBT-Halbbrücken mit Freilaufdioden benutzt, wobei der der Stromrichterdiode parallel geschaltete IGBT ungenutzt bleibt.

Aufgabe der vorliegenden Erfindung ist es, für eine Stromrichterschaltung mit Spannungserhöhung und möglichst geringer Anzahl von Bauelementen ein Ansteuerverfahren anzugeben.

Die Aufgabe wird gelöst durch ein Verfahren gemäß Patentanspruch 1, bei dem eine Stromrichter-Schaltung mit Spannungserhöhung betrieben wird, die über N Halbbrücken verfügt. Die Halbbrücken sind jeweils mit ihrem Mittenanschluss an eine Phase eines N-phasigen Generators anschließbar. Die Halbbrücken sind endseitig parallel auf eine Reihenschaltung von zwei Kapazitäten geschaltet. Je nach Anwendungsfall kann zusätzlich ein Mittenanschluss des Generators auf den Mittenanschluss zwischen den beiden Kapazitäten geschaltet sein. Jede Halbbrücke enthält einen Top- und einen Botschalter.

Gemäß dem erfindungsgemäßen Verfahren wird ein PWM-Verfahren mit fester Periodendauer durchgeführt. Bei Beginn der Periodendauer werden alle Topschalter gleichzeitig für die Dauer eines Topeinschaltintervalls eingeschaltet. Nach der halben Periodendauer werden alle Botschalter gleichzeitig für die Dauer eines Boteinschaltintervalls eingeschaltet. Top- und Boteinschaltintervall sind hierbei jeweils kleiner gleich der halben Periodendauer.

Das erfindungsgemäße PWM-Verfahren orientiert sich hierbei nicht an der Phasenlage der Ausgangsspannungen des Generators. Die Taktperiode des PWM-Verfahrens ist nur insofern an die Ausgangsfrequenz des Generators gekoppelt, als die PWM-Frequenz deutlich höher als die maximale Ausgangsfrequenz liegen sollte, z.B. im Bereich des mehreren 10-fachen, z.B. 60-fachen.

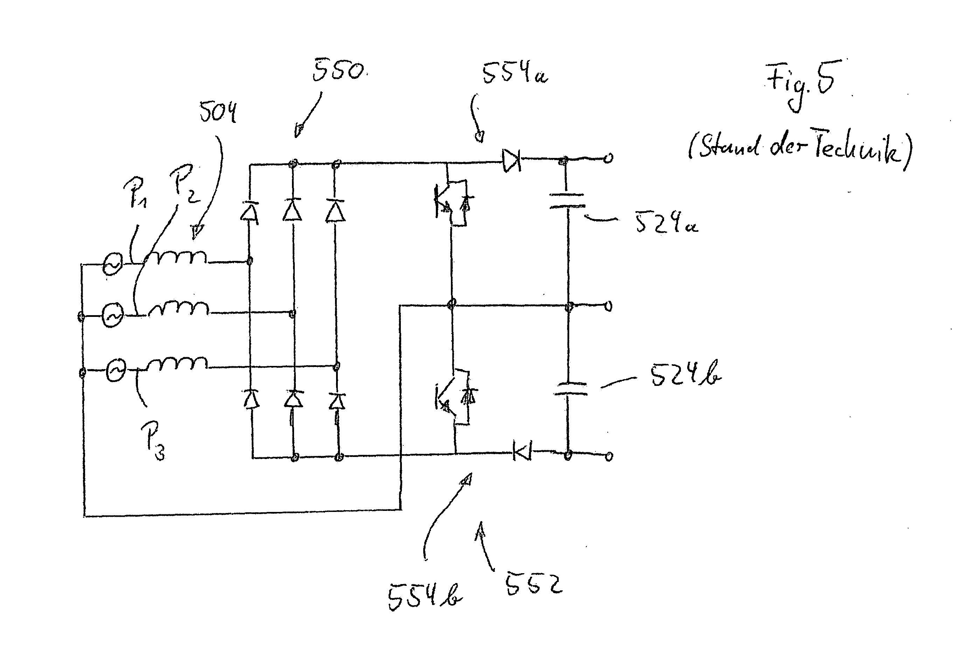

Da jeweils sämtliche Topschalter und sämtliche Botschalter gleichzeitig ein- sowie ausgeschaltet werden, sind auch hier keine besonderen Synchronisations- oder andere Vorkehrungen zu treffen. Die bekannte Schaltung gemäß Fig. 5 kann daher erfindungsgemäß auch um gestrichelt gezeichnete gemeinsame Steuerleitungen 11a,b erweitert werden, die jeweils die Eingänge aller Top- und Bot-Schalter verbinden.

Die Topologie der Stromrichter-Schaltung bleibt einfach und kostengünstig, da lediglich N Standard-Leistungshalbleitermodule als Halbleiterbauelemente notwendig sind. Die entsprechenden Halbbrücken sind in der Regel nur mit den benötigten Bauelementen bestückt, so dass diese voll genutzt werden. Die Funktion der Spulen im Drosselblock in Fig. 5 wird hierbei durch die Wicklungen des Generators übernommen.

Top- und Boteinschaltintervall dauern in der Regel gleich lange. Die auf die jeweiligen Top- und Botkondensatoren geladene Spannung ist dann ebenfalls gleich groß, die Spannung des Mittenanschlusses der Kondensatoren liegt symmetrisch zwischen den Endspannungen.

In einer bevorzugten Ausführungsform der Erfindung ist das Einschaltintervall von Top- und Botschaltern unterschiedlich lange gewählt. Auch dies ist besonders einfach zu bewerkstelligen, da hier keinerlei sonstige Synchronisationen zwischen den Top- oder Botschaltern der einzelnen Phasen notwendig werden. Hierdurch wird erreicht, dass die beiden Kondensatoren auf unterschiedliche Spannungswerte aufgeladen werden, sich also mit anderen Worten die Mittenspannung an den Kondensatoren im Gleichspannungszwischenkreis verschieben lässt.

In einer weiteren bevorzugten Ausführungsform des Verfahrens weist der Generator eine konstante oder im Falle von Schwankungen maximale Betriebsfrequenz f_{B} auf. Die Periodendauer wird dann als ein Bruchteil im Bereich von 1/10 oder weniger, z.B. etwa 1/60 der Periodendauer der Betriebsfrequenz, also zu 1/60f_{B} gewählt. Mit anderen Worten werden die Schalter mit der mehr als 10-fachen,z.B. 60-fachen Frequenz der maximalen Betriebsfrequenz des Generators betrieben. Hierdurch ist eine besonders geringe Restwelligkeit der erzeugten Gleichspannung an den Kondensatoren zu erreichen, da sich durch die Überlagerung der Top- und Bot-Einschaltintervalle mit halber Periodendauer die resultierende Frequenz nochmals verdoppelt.

Die bekannten Stromrichter-Schaltungen können auch kaskadiert werden, indem K solcher Schaltungen an den Anschlüssen der Zwischenkreise, also den Endanschlüssen der Kondensatorreihenschaltungen parallel geschaltet werden. Die jeweiligen Top-und Botschalter der jeweiligen Stromrichter-Schaltungen werden dann in einer bevorzugten Ausführungsform mit einem Zeitversatz vom 1/2K fachen der Periodendauer eingeschaltet.

Mit anderen Worten werden z.B. bei einer Parallelschaltung von vier Stromrichter-Schaltungen in der ersten Hälfte der Periodendauer des PWM-Verfahrens in zeitgleichen Abständen eines achtels der Periodendauer alle vier Topschalter der vier Schaltungen nacheinander für die Dauer der Einschaltintervalle eingeschaltet. In der zweiten Hälfte der Periodendauer werden dann nacheinander sämtliche vier Botschalter der vier Boost-Schaltungen ebenfalls mit einem Zeitversatz von einem achtel der Periodendauer eingeschaltet. Die Frequenz der Restwelligkeit der erzeugten Gleichspannung steigt so nochmals um den Faktor K.

In einer weiteren vorteilhaften Ausführungsform wird jeder der Kapazitäten auf einen Spannungswert von mehr als der halben Scheitelspannung des Generators aufgeladen. Hierdurch ist ein Betrieb der Schaltung zur Spannungserhöhung gegenüber dem Generator möglich.

Mit dem erfindungsgemäßen Verfahren ist die Ansteuerung einer Stromrichterschaltung sehr vereinfacht. Bei einem mehr als dreiphasigen, z.B. fünfphasigen Generatorsystem ergeben sich die bekannten grundsätzlichen Vorteile vielphasiger Systeme, wie z.B. eine geringere Restwelligkeit der Ausgangsspannungen. Aufgrund der Komplexität bisheriger Ansteuerverfahren für Stromrichterschaltungen konnten vielphasige Systeme jedoch bisher nur mit erheblichem Aufwand genutzt werden. Durch das erfindungsgemäße Verfahren ist die Verwendung von Stromrichtern für mehrphasige Systeme einfach nutzbar und praktikabel. Die Phasenzahl des Systems kann also beliebig gewählt werden, ohne dass der Steueraufwand für die Stromrichterschaltung ansteigt.

Für eine weitere Beschreibung der Erfindung wird auf die Ausführungsbeispiele der Zeichnungen verwiesen. Es zeigen, jeweils in einer schematischen Prinzipskizze:
Fig. 1 den zeitlichen Verlauf der PWM-Ansteuersignale bei symmetrischer Ansteuerung der bekannten Stromrichter-Schaltung aus Fig. 5,
Fig. 2 den zeitlichen Verlauf der PWM-Ansteuersignale und der erzeugten Spannungen bei asymmetrischer Ansteuerung,
Fig. 3 eine fünfphasige Stromrichter-Schaltung, welche mit dem erfindungsgemäßen Verfahren betrieben wird,
Fig. 4 eine dreiphasige Stromrichter-Schaltung gemäß Stand der Technik,
Fig. 5 eine alternative dreiphasige Stromrichter-Schaltung gemäß Stand der Technik.

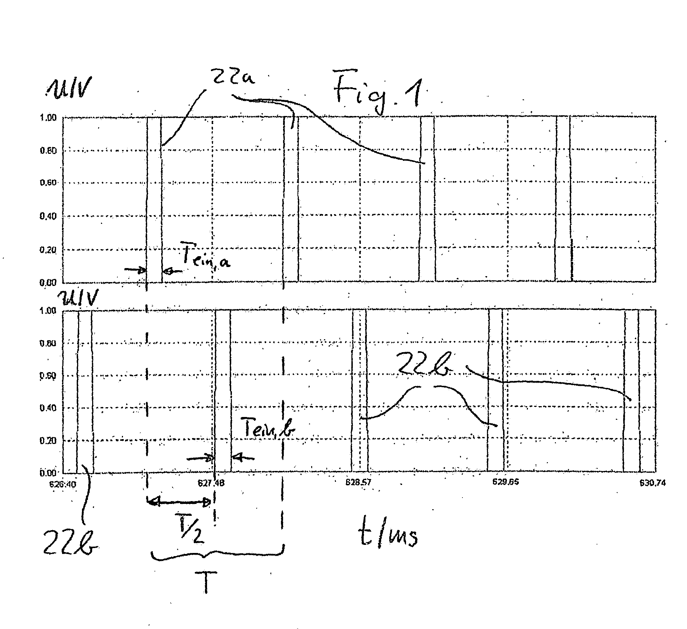

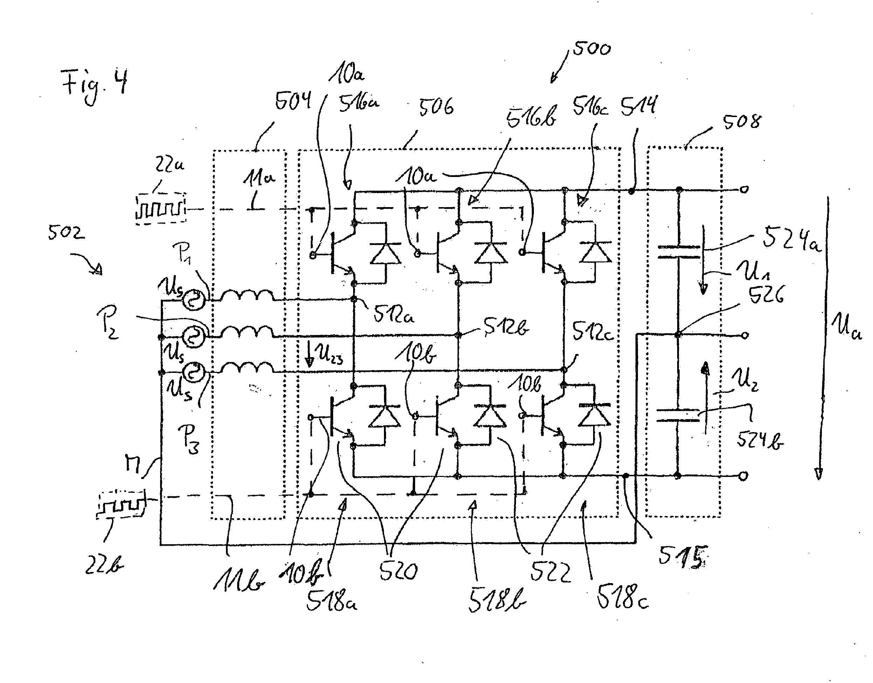

Fig. 1 zeigt die PWM-Signale 22a,b, die den Steuerungseingängen 10a,b der Top- und Botschalter 516a-c und 518a-c aus Fig. 4 zugeführt werden über der Zeit t in ms. Der die Signale erzeugende PWM-Generator 16 (in Fig. 4 nicht gezeigt) wird hierbei mit einer konstanten Taktfrequenz f_{T}, die deutlich über der Betriebsfrequenz fB liegt, nämlich bei fT=X*fB, bzw. Periodendauer T betrieben. Durch die erfindungsgemäße Parallelschaltung der Top-Schalter 516a-c und der Bot-Schalter 518a-c anhand der Steuerleitungen 11a,b werden diese jeweils gleichzeitig angesteuert. Erfindungsgemäß sind die Einschaltzeitpunkte der PWM-Signale 22a und 22b um die halbe Periodendauer T/2 versetzt. Die Einschaltzeiten Tₑᵢₙ,ₐ und Tₑᵢₙ,_{b} für die jeweiligen Top- und Botschalter sind gleich groß gewählt. Geht man davon aus, dass die Periodendauer T einem Winkelbereich von 360° entspricht, liegt die Einschaltzeit Tₑᵢₙ,ₐ der Topschalter im Bereich 0° bis 40° und die Einschaltzeit T_{ein,b} der Botschalter im Bereich von 180° bis 220°. Die Spannungen U₁ und U₂ über die beiden Kondensatoren des Zwischenkreises 20 bzw. 508 sind daher betragsmäßig entgegengesetzt gleich groß.

Durch den Phasenversatz der Einschaltzeigen gemäß Fig. 1 ist die Frequenz der Welligkeit der Ausgangsspannung Ua größer als die der einzelnen Spannungen U1 und U2 gegenüber dem Mittenpotential am Mittenanschluss 526.

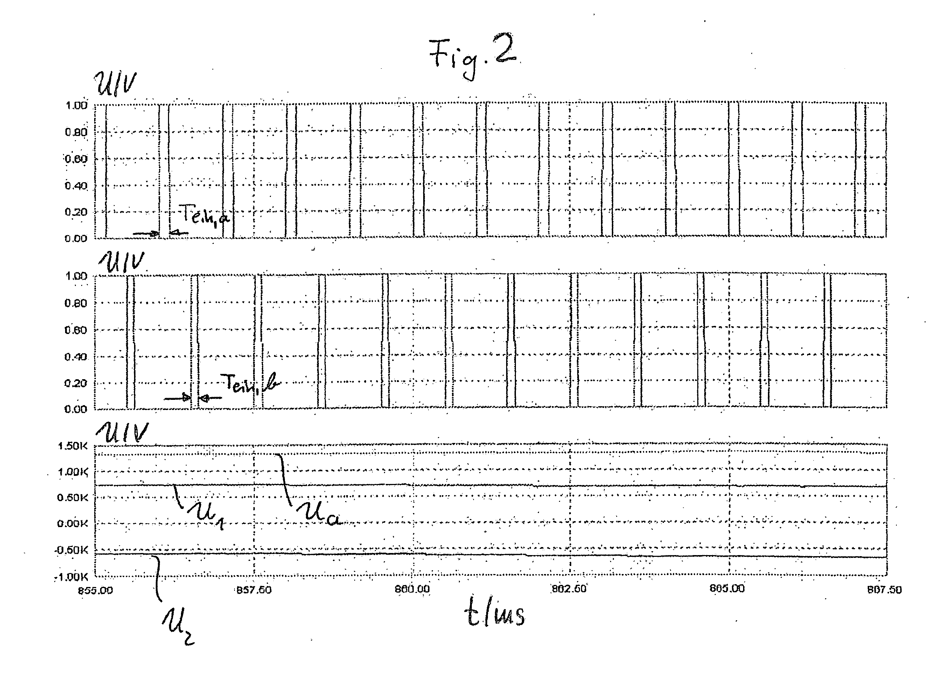

Fig. 2 zeigt die PWM-Signale 22a,b bei einer alternativen Ansteuerung der Stromrichter-Schaltung 500, bei welcher - bei obiger 360°-Betrachtung - das Einschaltintervall T_{ein,a} der Topschalter mit 0 bis 60° größer ist als das Einschaltintervall T_{ein,b} der Botschalter von 180° bis 220°. Aufgrund der längeren PWM-Pulse an den Topschaltern sind diese länger leitend, der von diesen verursachte Boost ist erhöht, die Spannung U₁ ist daher vom Betrag größer als die Spannung U₂. Die Mittenspannung am Mittenanschluss 526 liegt daher nicht symmetrisch bzw. bei der Hälfte der Ausgangsspannung U_{A}.

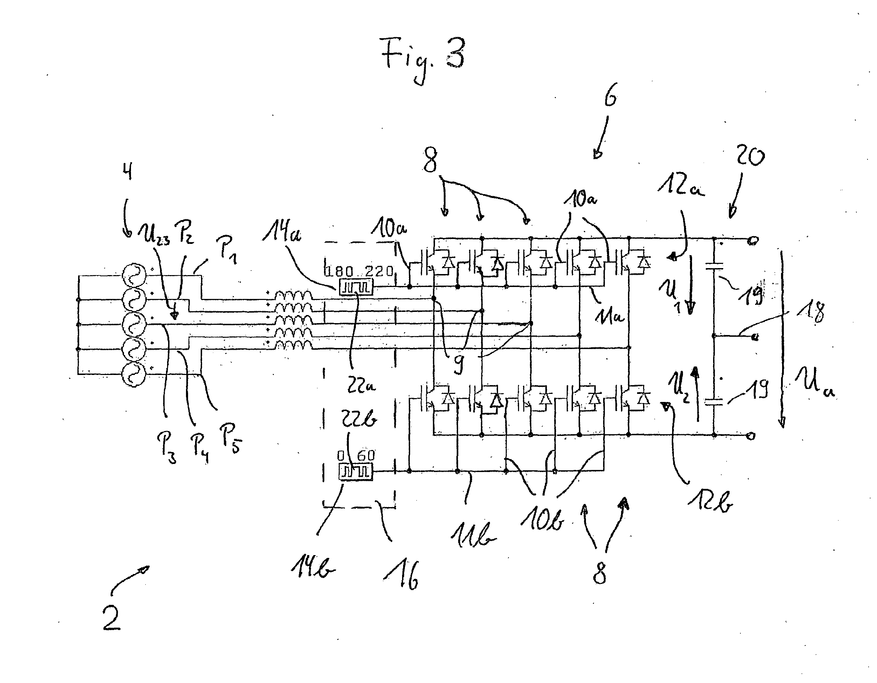

Fig. 3 zeigt eine Stromrichter-Schaltung 2, welche der bekannten Stromrichter-Schaltung aus Fig. 4 gemäß Stand der Technik entspricht, jedoch für einen Generator 4 mit fünf Phasen P₁ bis P₅ angepasst wurde. Der Wechselrichter 6 enthält daher fünf Halbbrücken 8 mit ihren Mittenanschlüssen 9.

Die jeweiligen Steuereingänge 10a der Topschalter 12a und die jeweiligen Steuereingänge 10b der Botschalter 12b sind wieder über je eine Steuerleitung 11a,b parallel geschaltet und auf jeweils einem gemeinsamen Steuerausgang 14a,b, der PWM-Schaltung 16 geführt.

Der Generator 4 verfügt im Übrigen über keinen Mittenanschluss, welcher mit dem Mittenanschluss des Zwischenkreises 20 verbunden wäre, die Kondensatoren 19 sind daher lediglich über einen Mittenanschluss 18 verbunden, der nicht mit dem Generator verbunden ist.

Die Ansteuerung der fünfphasigen Boost-Schaltung 2 erfolgt identisch zur obigen Ansteuerung der dreiphasigen Schaltung mit den gleichen Auswirkungen. Eine Skalierung der Phasenanzahl ist also mit dem erfindungsgemäßen Verfahren leicht möglich. Vielphasige Systeme mit beliebiger Phasenzahl über drei können also leicht genutzt werden.

## Patentansprüche

1. Verfahren zum Betreiben einer Stromrichter-Schaltung mit Spannungserhöhung (2,500) mit N, jeweils mit ihrem Mittenanschluss (9,512a-c) an eine Phase (P1-5) eines N-phasigen Generators (4,502) anschließbaren, endseitig parallel auf eine Reihenschaltung von zwei Kapazitäten (19,524a,b) geschalteten Halbbrücken (8,510a-c), wobei jede Halbbrücke (8,510a-c)einen Top-Schalter (12a,516a-c) und einen Bot-Schalter (12b,518a-c) enthält, bei dem in einem PWM-Verfahren mit fester Periodendauer (T):
- bei Beginn der Periodendauer (T) alle TOP-Schalter (12a,516a-c) gleichzeitig für die Dauer eines TOPEinschaltintervalls (Tein,a) eingeschaltet werden,
- nach der halben Periodendauer (T/2) alle BOT-Schalter (12b,518a-c) gleichzeitig für die Dauer eines BOTEinschaltintervalls (Tein,b) eingeschaltet werden,
- wobei TOP- (Tein,a) und BOT-Einschaltintervall (Tein,b) maximal die halbe Periodendauer (T/2) betragen.

2. Verfahren nach Anspruch 1, bei dem TOP- (Tein,a) und BOT-Einschaltintervall (Tein,b) unterschiedlich lange gewählt werden.

3. Verfahren nach Anspruch 1 oder 2, wobei der Generator (4,502) eine Betriebsfrequenz (f_{B}) aufweist bei dem als Periodendauer (T) etwa ein Wert vom mehreren zehnfachen des Kehrwertes der Betriebsfrequenz (f_{B}) gewählt wird.

4. Verfahren nach einem der vorhergehenden Ansprüche, wobei K Stromrichter-Schaltungen (2,500) an ihren Kapazitäten (19,524a,b) parallel geschaltet sind, bei dem die Top-Schalter (12a,516a-c) und die Bot-Schalter (12b,518a-c) der jeweiligen Stromrichter-Schaltung (2,500) mit einem Zeitversatz vom 1/2K-fachen der Periodendauer (T) eingeschaltet werden.

5. Verfahren nach einem der vorhergehenden Ansprüche, bei dem jede der Kapazitäten (19,524a,b) auf einen Spannungswert von mehr als der halben Scheitelspannung (Uₛ) des Generators (4,502) aufgeladen wird.
